Europäisches Patentamt

European Patent Office

Office européen des brevets

(11) Veröffentlichungsnummer: **0 296 345 B1**

## (12) EUROPÄISCHE PATENTSCHRIFT

(45) Veröffentlichungstag der Patentschrift: **01.07.92**

(51) Int. Cl.⁵: **B23K 11/30**

(21) Anmeldenummer: **88107358.9**

(22) Anmeldetag: **07.05.88**

(54) **Elektrodendraht für eine Rollennahtschweissmaschine.**

(30) Priorität: **22.06.87 CH 2346/87**

(43) Veröffentlichungstag der Anmeldung:
**28.12.88 Patentblatt  88/52**

(45) Bekanntmachung des Hinweises auf die
Patenterteilung:
**01.07.92 Patentblatt  92/27**

(84) Benannte Vertragsstaaten:
**CH DE ES FR GB GR IT LI SE**

(56) Entgegenhaltungen:
**CH-A- 370 175**
**DE-B- 1 565 803**
**DE-C- 3 526 648**

(73) Patentinhaber: **ELPATRONIC AG**
**Baarerstrasse 112**
**CH-6300 Zug(CH)**

(72) Erfinder: **Urech, Werner**
**Rheingasse 28**
**CH-8434 Kaiserstuhl(CH)**

**Beschreibung**

Die Erfindung betrifft einen Elektrodendraht für eine Rollennahtschweißmaschine mit mindestens einer Rollenelektrode und einer in deren Umfang vorgesehenen Führungsnut zur Aufnahme des Elektrodendrahtes, dessen dem Schweißgut zuzuwendende Vorderseite im Querschnitt ballig ist und dessen in der Führungsnut der Rollenelektrode aufzunehmende Rückseite im Querschnitt vorzugsweise V-förmig oder rund ist.

Rollennahtschweißmaschinen, bei denen mit Elektrodendraht gearbeitet wird, sind bekannt (CH-A-370 175 und DE-B-15 65 803). Es handelt sich dabei um Widerstands-Rollennahtschweißmaschinen, bei denen der üblicherweise aus Kupfer bestehende Elektrodendraht verhindert, daß die Rollenelektroden, die üblicherweise aus einer Kupferlegierung bestehen, durch die mit Zinn, Zink, Blei usw. überzogenen Bleche verschmutzt werden. Anderenfalls würden nämlich beim Widerstandsschweißen von mit solchen Beschichtungen versehenen Blechen die Rollenelektroden unter der Einwirkung der Schweißtemperaturen und der Anpreßdrücke Legierungen mit dem Beschichtungswerkstoff des Schweißgutes eingehen und dadurch kontaminiert werden. Durch diese Legierungsbildung würden die Schweißparameter, insbesondere die den Strom- und den Wärmedurchgang bzw. -übergang beeinflussenden Werkstoffkennwerte des Rollenelektrodenmaterials, verändert und dadurch die Schweißgefügebildung beeinträchtigt werden. Dieses Problem wird durch den zwischen dem Schweißgut und der Rollenelektrode verwendeten Elektrodendraht beseitigt, der der Schweißstelle ständig frisch zugeführt wird. Der Elektrodendraht legiert sich mit dem kurz vor oder während der Schweißung flüssig werdenden Beschichtungswerkstoff des Bleches und verhindert dadurch, daß der freiwerdende Beschichtungswerkstoff sich mit den Rollenelektroden verbindet und diese damit unbrauchbar macht. Der durch den Schweißvorgang kontaminierte Draht wird ständig wegtransportiert. Der Elektrodendraht wird von einer Vorratsrolle abgewickelt und nach dem Durchlaufen der Schweißstelle auf eine Aufnahmerolle aufgewickelt oder zerkleinert, um später eingeschmolzen zu werden.

Der bei solchen Rollennahtschweißmaschinen verwendete Elektrodendraht hat üblicherweise einen derartigen Querschnitt, daß die Berührungsfläche zwischen dem Elektrodendraht und der Rollenelektrode größer als bei einem normalen Runddraht ist, um einen besseren Stromdurchgang und eine geringere Erwärmung zu erreichen. Für das Widerstands-Rollennahtschweißen von mit einer Beschichtung versehenen Blechen, insbesondere von Stahlblechen mit elektrisch schlecht oder nichtleitenden Beschichtungen oder starker Verschmutzung, ist ein Elektrodendraht der eingangs genannten Art bekannt (DE-Cl-35 26 648). Eine Ausgestaltung dieses bekannten Elektrodendrahtes ist ein sog. Tri-Elliptic-Draht, der auf der Rückseite im Querschnitt V-förmig und auf der Vorderseite ballig oder flach und zusätzlich geriffelt ist. Durch diese Riffelung werden die auf dem Blech haftenden, durch den Wärmevorlauf erweichten, elektrisch schlecht oder nichtleitenden Beschichtungen durchstochen bzw. verdrängt. Dadurch wird das Aufschwimmen der Rollenelektrode auf der Beschichtung, z.B. einer Farbschicht, verhindert. Der in der folgenden Beschreibung und in den Patentansprüchen verwendete Begriff Elektrodendraht soll sowohl an der Vorderseite geriffelten als auch an der Vorderseite ungeriffelten Elektrodendraht umfassen.

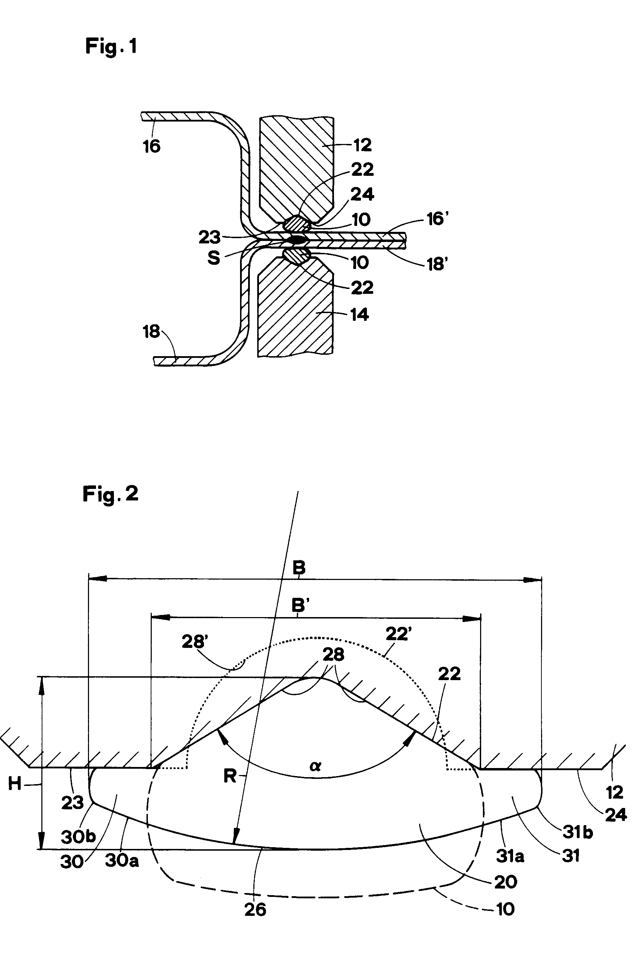

Tri-Elliptic-Elektrodendraht, wie er in Fig. 2 in Querschnittansicht gestrichelt dargestellt ist, hat sich besonders beim Schweißen von Kraftfahrzeugtanks mit elektrolytischer Verbleiung, relativ breiten Schweißflanschen, Schweißflanschen ohne nennenswerte Ziehfalten und parallelen Schweißflanschen bestens bewährt. Es gibt aber kritische Fälle, in denen die Schweißung problematisch werden kann, z.B. bei feuerverbleiten Blechen, bei zu schmalen Schweißflanschen, bei Schweißflanschen mit Ziehfalten, bei unparallelen Schweißflanschen, insbesondere wenn sich diese zur Tankinnenseite hin öffnen, und bei großen, in die Tankflansche laufenden Übergangsradien.

Die Gründe für die in solchen kritischen Fällen möglichen Probleme sind: Die Feuerverbleiung ist meist dicker und in der Schichtdicke unregelmäßiger als die elektrolytische Verbleiung. Sie verlangt höhere Schweißströme, die zu einer stärkeren Erwärmung des Bleches und des Elektrodendrahtes und zu tiefen Drahteindrücken im Blech führen. Schmale Schweißflansche der Tanks führen zu einem Wärmestau zwischen der Schweißnaht und der Blechkante durch den Wärmevorlauf. Damit erweicht der Rand und weicht seitlich aus. Der Draht wird nur noch einseitig abgestützt. Er verformt sich einseitig und hat die Tendenz abzulaufen, d.h. er verhält sich wie ein schlecht aufgepumpter Fahrradreifen (sog. "Fahrradreifeneffekt"). Ziehfalten im Blech müssen bei der Schweißung durch die Schweißkraft über den Elektrodendraht geglättet werden. Das erfordert eine höhere Schweißkraft als für die Schweißung erforderlich ist. Die resultierende Schweißkraft zwischen den Blechen schwankt, d.h. an Stellen, an denen Verformungsarbeit geleistet werden muß, ist sie reduziert. Die Schweißung wird unregelmäßig. Die höhere Schweißkraft erfordert auch mehr Schweißstrom und bewirkt eine stärkere Erwärmung und Verformung des Elektrodendrahtes sowie tiefere Eindrücke im Blech. Unparallele Schweißflansche der Tanks müssen ebenfalls durch die Rollenelektroden zusammengepreßt werden. Dadurch wird das Blech neben der Naht auf Scherung beansprucht. Große in die Tankflansche laufende Übergangsradien haben denselben Einfluß wie unparallele Tankflansche.

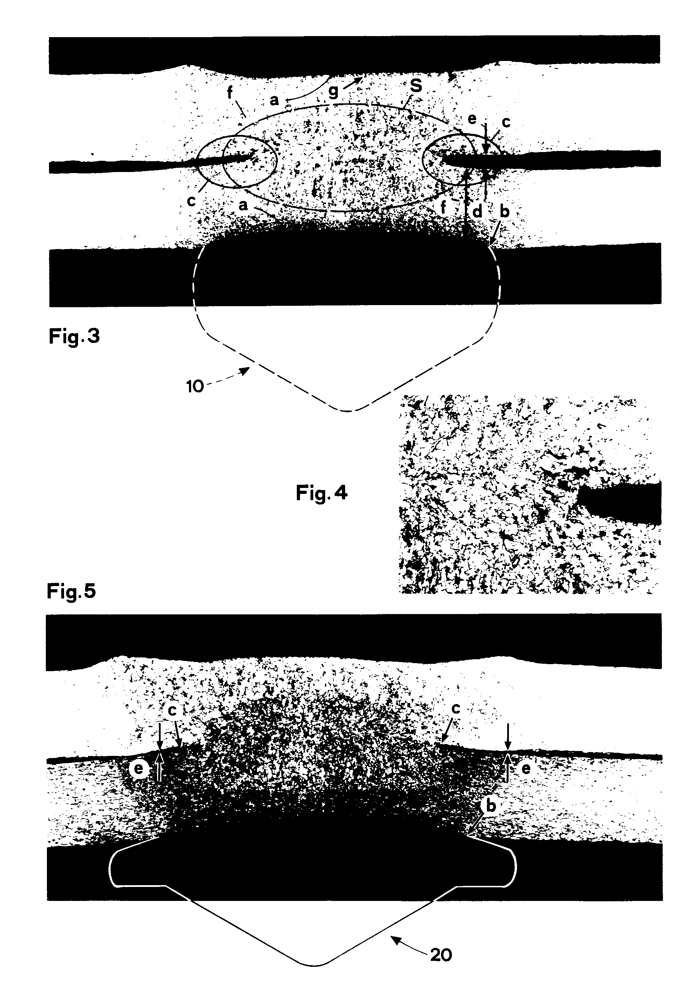

Wie sich das alles addieren und im Extremfall die Schweißung problematisch machen kann, wird im folgenden unter Bezugnahme auf die Fig. 3 und 4 näher erläutert.

Fig. 3 zeigt eine Schweißung, die mit herkömmlichem Tri-Elliptic-Elektrodendraht gemäß Fig. 1 an den Flanschen eines Tanks aus verbleitem Blech hergestellt worden ist. Es ist ohne weiteres zu erkennen, daß die erzielte Schweißlinse S nicht die ideale Schweißlinse ist und daß a) die außen liegenden Blechoberflächen tiefe Drahteindrücke aufweisen, an deren Längsrändern deutlich die Kanteneindrücke b) des Elektrodendrahtes zu erkennen sind (vgl. den in Fig. 3 gestrichelt angedeuteten Tri-Elliptic-Elektrodendraht, der zum Schweißen benutzt worden ist), c) die Schweißlinse S von der Seite her angerissen ist (Detail siehe Fig. 4), d) Schwachstellen im Blech vorhanden sind, die wesentlich dünner als die Blechstärke sind (Gelenkbildung), e) die Bleche bereits direkt neben der Schweißlinse S klaffen, f) Schubrisse (erst bei höherer Vergrösserung erkennbar) in Bereichen neben der Schweißlinse S im Blech auftreten und g) Oberflächenrisse infolge Querbelastung des Bleches durch abflachenden Draht hervorgerufen werden. Dauerwechselfestigkeitstests haben ergeben, daß Tanks mit Schweißungen gemäß den Fig. 3 und 4 bereits nach 30-70% der geforderten Lastwechselzahl undicht wurden, also zu wenig ermüdungsfest waren.

Aufgabe der Erfindung ist es, einen Elektrodendraht der eingangs genannten Art so auszubilden, daß sich mit ihm in kritischen Fällen wie den oben dargelegten wesentlich bessere Schweißergebnisse und ermüdungsfestere Schweissungen als mit herkömmlichem Tri-Elliptic-Elektrodendraht erzielen lassen.

Zur Lösung dieser Aufgabe ist der Elektrodendraht gemäß dem Oberbegriff des Anspruchs 1 erfindungsgemäss dadurch gekennzeichnet, dass in Drahtlängsrichtung im Uebergangsbereich zwischen der Vorder- und der Rückseite zusätzlich zwei Flansche angeformt sind, zur Abstützung des Elektrodendrahtes auf dem Umfang der Rollenelektrode beiderseits der Führungsnut, wobei die Vorderseite einschliesslich der Vorderseite der Flansche einen gemeinsamen Krümmungsradius hat, welcher so gewählt ist, dass auch während des Schweissens die äusseren Längskanten der Flansche die Oberfläche des Schweissgutes nicht berühren.

Der erfindungsgemässe Elektrodendraht hat durch die an seinen beiden Längsseiten zusätzlich angeformten Flansche eine wesentlich grössere Berührungsfläche mit der Rollenelektrode als der herkömmliche Elektrodendraht. Er ist im Profil breiter als seine Berührungsfläche auf der Blechoberfläche. Da die Längskanten der Flansche die Blechoberfläche nicht berühren, verursachen sie keine Kanteneindrücke im Blech, wie sie von herkömmlichen Elektrodendrahtformen her bekannt sind. Sodann ist das über die Führungsnut hinausragende Profil des erfindungsgemässen Elektrodendrahtes sehr dünn und kann sich, auch wenn der Draht während der Schweissung weich wird, unter Querkräften nicht seitlich verformen, so dass der Fahrradreifeneffekt nicht auftritt. Durch die grössere Berührungsfläche wird der Elektrodendraht nach der Erfindung auch besser gekühlt als herkömmlicher Elektrodendraht. Außerdem ist die spezifische Strombelastung am Übergang Rolle/Draht wesentlich geringer. Durch die wesentlich breitere Auflagefläche des Elektrodendrahtes nach der Erfindung auf dem Blech wird dieses auch neben der Schweißlinse zusammengepreßt. Das Klaffen der Bleche neben der Schweißlinse und damit auch das seitliche Aufreißen der Schweißlinse wird verhindert.

Die oben erwähnten Probleme, die bei Verwendung herkömmlichen Tri-Elliptic-Elektrodendrahtes bei der Rollennahtschweißung auftreten können, würden bei einer konventionellen Rollennahtschweißung ohne Elektrodendraht normalerweise zwar nicht auftreten, eine solche konventionelle Rollennahtschweißung ohne Elektrodendraht wäre jedoch in den hier in Rede stehenden Fällen wie z.B. verbleitem Blech aus den eingangs dargelegten Gründen nicht vorteilhaft. Die erfindungsgemäß vorgenommene Anpassung der Profilform des Elektrodendrahtes an die Form einer konventionellen Rollenelektrode hat zu dem Ergebnis geführt, daß die Schweißgüte derjenigen einer konventionellen Schweißung ohne Elektrodendraht mindestens ebenbürtig ist und daß die Schweißsicherheit und die Wirtschaftlichkeit durch die Vorteile, die die Verwendung des Elektrodendrahtes mit sich bringt (gleichmäßige Schweißparameter, schmale Schweißnaht, geringe Wärmeeinbringung, hohe Schweißgeschwindigkeit, Wegfall der Außenkühlung), wesentlich erhöht sind.

Vorteilhafte Ausgestaltungen der Erfindung bilden den Gegenstand der Unteransprüche. Gemäß diesen Ausgestaltungen ist der Elektrodendraht nach der Erfindung im Profil breiter als seine Berührungsfläche auf der Blechoberfläche. Die Kanten des Elektrodendrahtes nach der Erfindung, d.h. die äußeren Längekanten seiner Flansche berühren die Blechoberfläche nicht. Die von herkömmlichen Elektrodendrahtformen her bekannten Kanteneindrücke auf dem Blech sind daher nach der Schweißung nicht vorhanden. Die Berührungsfläche zwischen der Rollenelektrode und dem Elektrodendraht wird um 30 bis 50% und vorzugsweise um ca. 40% vergrößert, was die entsprechend bessere Kühlung und geringere spezifische Strombelastung ergibt.

Ausführungsbeispiele der Erfindung werden im folgenden unter Bezugnahme auf die Zeichnungen näher beschrieben. Es zeigt

Fig. 1    als Teil einer-Rollennahtschweißmaschine die Rollenelektroden mit herkömmlichem Elektrodendraht beim Verschweißen von Blechen zu einem Kraftstofftank,

Fig. 2    eine Teilquerschnittansicht einer Rollenelektrode mit dem Elektrodendraht nach der Erfindung, wobei ein herkömmlicher Elektrodendraht zum Vergleich gestrichelt angedeutet ist,

Fig. 3    ein Schliffbild einer gemäß Fig. 1 mit herkömmlichem Elektrodendraht hergestellten Schweißung,

Fig. 4    eine vergrößerte Darstellung eines der in Fig. 3 mit c bezeichneten Bereiche, und

Fig. 5    ein Schliffbild einer mit dem Elektrodendraht nach der Erfindung an dem gleichen Blech wie in Fig. 2 hergestellten Schweißung.

Fig. 1 zeigt einen Teil einer Widerstands-Rollennaht-Schweißmaschine mit herkömmlichem Elektrodendraht 10 (DE-Cl-35 26 648), von der lediglich eine obere Rollenelektrode 12 und eine untere Rollenelektrode 14 dargestellt sind. In dem dargestellten Beispiel wird ein Kraftstofftank aus Blechen 16, 18 geschweißt. Zwischen jeder Rollenelektrode und dem Blech befindet sich der Elektrodendraht 10. Der dargestellte herkömmliche Elektrodendraht 10 ist sogenannter Tri-Elliptic-Elektrodendraht. Im Gegensatz dazu hat der Elektrodendraht 20 nach der Erfindung ein breiteres und flacheres Profil, was aus Fig. 2 ohne weiteres zu erkennen ist, in welcher außer dem mit ausgezogenen Linien dargestellten Elektrodendraht 20 zu Vergleichszwecken auch der herkömmliche Elektrodendraht 10 gestrichelt angedeutet ist. Auf Fig. 2 wird im folgenden noch näher eingegangen. Wenn mit dem Elektrodendraht 20 statt mit dem Elektrodendraht 10 geschweißt wird, wird ein solcher Elektrodendraht 20 der oberen Rollenelektrode 12 und ein weiterer Elektrodendraht 20 der unteren Rollenelektrode 14 zugeführt. Die Rollenelektroden 12,14 sind an ihrem Umfang jeweils mit einer Führungsnut 22 versehen, die im Querschnitt insgesamt V-förmig ist. Die der Führungsnut 22 benachbarten beiden Umfangsflächen 23, 24 sind im Querschnitt jeweils eben. An den Blechen 16, 18 sind Flansche 16′, 18′ angeformt,die zwischen den Rollenelektroden 12, 14 miteinander verschweißt werden.

Fig. 2 zeigt wie erwähnt mit ausgezogenen Linien den Elektrodendraht 20 nach der Erfindung und mit gestrichelten Linien den herkömmlichen Elektrodendraht 10. Der Scheitelwinkel α der Führungsnut 22, der gleich dem Scheitelwinkel des in der Führungsnut 22 aufgenommenen Teils des Elektrodendrahtes 20 ist, beträgt in dem in Fig. 2 gezeigten Beispiel 120°. Der dargestellte Elektrodendraht ist an seiner dem Schweißgut zuzuwendenden Vorderseite 26 im wesentlichen ballig, wogegen seine in der Führungsnut 22 aufgenommene Rückseite 28 wie erwähnt im wesentlichen V-förmig ist. Es könnte ohne weiteres auch ein Elektrodendraht verwendet werden, der an seiner Vorderseite 26 die mit ausgezogenen Linien dargestellte ballige Form hat, an seiner Rückseite 28′ aber eine in einer runden Führungsnut 22′ aufgenommene runde Form, was in Fig. 2 durch punktierte Linien angedeutet ist. Wie ebenfalls bereits erwähnt ist der Elektrodendraht 20 für einen einmaligen Durchlauf zwischen einer Rollenelektrode und dem Schweißgut vorgesehen.

Der Elektrodendraht 20 ist in seinem Übergangsbereich zwischen der Vorderseite 26 und der Rückseite 28 mit angeformten Flanschen 30, 31 versehen, die zur Abstützung des Elektrodendrahtes 20 auf den Umgangsflächen 23 bzw. 24 der Rollenelektrode beiderseits der Führungsnut 22 dienen. Sowohl der Draht 10 als auch der Draht 20 werden aus Runddraht hergestellt, wofür ein an der Rollennahtschweißmaschine oder außerhalb derselben vorgesehenes Profilaggregat benutzt wird. Der runde Ausgangsdraht für den Elektrodendraht 10 hat bei dem hier beschriebenen Beispiel einen Durchmesser von 2,2 mm und erfährt beim Profilieren eine Verlängerung um ca. 12%. Der runde Ausgangsdraht des Elektrodendrahtes 20 hat hingegen einen Durchmesser von 2,5 mm und erfährt beim Profilieren eine Verlängerung um ca. 25 - 60% und vorzugsweise um 35%. Wenn die Fläche der Rückseite 28, mit der der Draht 10 die Rollenelektrode 12 in der Führungsnut 22 berührt, mit 100% angenommen wird, so beträgt die Berührungsfläche zwischen dem Elektrodendraht 20 und der Elektrodenrolle 12 140%, da der Elektrodendraht 20 die Elektrodenrolle 12 zusätzlich mit der Rückseite seiner Flansche 30 und 31 berührt. Aus Fig. 2 ist ohne weiteres zu erkennen, daß die in der Führungsnut 22, 22′ aufgenommene Rückseite 28, 28′ des Elektrodendrahtes 20 abgewinkelt in die Rückseite der Flansche 30, 31 übergeht, und daß die gesamte Vorderseite 26 einschließlich der Vorderseite 30a, 3la der Flansche 30, 31 ballig ist, d.h. einen gemeinsamen Krümmungsradius R aufweist.

Fig. 5 zeigt ein Schliffbild einer Schweißung, die mit dem Elektrodendraht 20 nach Fig. 2 an einem Kraftstofftank hergestellt worden ist. Im Vergleich zu der Schweissung mit herkömmlichem Tri-Elliptic-Elektrodendraht nach Fig. 3 ist in Fig. 5 zu erkennen, daß bei b) die Längskante des Elektrodendrahtes 20 mit dem Blech nicht in Berührung ist, wodurch sich ein weicherer Übergang ergibt und die nachteiligen Drahtkanteneindrücke vermieden werden, daß bei c) die Schweißlinse nicht angerissen ist und daß bei e) die Bleche neben der Schweißlinse nicht klaffen.

Die oben bereits kurz erwähnten Dauerwechselfestigkeitstests haben bei einer Schweißung nach Fig. 3, die mit herkömmlichem Tri-Elliptic-Elektrodendraht hergestellt worden ist, eine zu geringe Ermüdungsfestigkeit ergeben. Die so geschweißten Tanks wurden nämlich im Test nach 30 bis 70% der geforderten Lastwechselzahl bereits undicht. Die Schweißung nach Fig. 5 mit dem Elektrodendraht 20 nach der Erfindung hat dagegen im Test gezeigt, daß die Ermüdigungsfestigkeit der Tanks wesentlich gesteigert werden konnte, denn diese Tanks waren auch nach dem Fünffachen der geforderten Lastwechselzahl, als der Test beendet wurde, noch dicht.

Gemäß Fig. 2 haben die Flansche 30, 31 jeweils eine äußere Längeskante 30b bzw. 31b. Der Krümmungsradius R ist so gewählt, daß auch während des Schweißens die äußeren Längskanten 30b, 31b der Flansche 30, 31 die Oberfläche des Schweißgutes nicht berühren. Das ist wie erwähnt in Fig. 5 zu erkennen. Dabei ist zu beachten, daß die Darstellung in den Fig. 2 und 5 den Elektrodendraht 20 im Querschnitt stark vergrößert zeigt. Bei einem Ausführungsbeispiel beträgt die Abmessung B in Fig. 2 in Wirklichkeit etwa 3,5 mm, die Abmessung B′ etwa 2,6 mm und die Abmessung H etwa 1,3 mm.

In den Zeichnungen ist zwar nur eine ballige Querschnittsform der Vorderseite des Elektrodendrahtes 20 dargestellt, seine Vorderseite könnte jedoch auch die in DE-Cl-35 26 648 in Fig. 6b dargestellten ebenen Querschnittsformen 1 bis 3 oder die V-förmige Querschnittsform 5 (jeweils gerillt oder ungerillt) aufweisen.

## Patentansprüche

1. Elektrodendraht für eine Rollennahtschweissmaschine mit mindestens einer Rollenelektrode (12) und einer in deren Umfang vorgesehenen Führungsnut (22) zur Aufnahme des Elektrodendrahtes (20), dessen dem Schweissgut (16') zuzuwendende Vorderseite (26) im Querschnitt ballig ist und dessen in der Führungsnut (22, 22') der Rollenelektrode (12) aufzunehmende Rückseite (28, 28') im Querschnitt vorzugsweise V-förmig oder rund ist, dadurch **gekennzeichnet,** dass in Drahtlängsrichtung im Uebergangsbereich zwischen der Vorder- und der Rückseite (26; 28, 28') zusätzlich zwei Flansche (30, 31) angeformt sind, zur Abstützung des Elektrodendrahtes (20) auf dem Umfang der Rollenelektrode (12) beiderseits der Führungsnut (22, 22'), wobei die Vorderseite (26) einschliesslich der Vorderseite (30a, 31a) der Flansche (30, 31) einen gemeinsamen Krümmungsradius (R) hat, welcher so gewählt ist, dass auch während des Schweissens die äusseren Längskanten (30b, 31b) der Flansche (30, 31) die Oberfläche des Schweissgutes (16') nicht berühren.

2. Elektrodendraht nach Anspruch 1, dadurch gekennzeichnet, dass die Berührungsfläche zwischen der Rollenelektrode (12) und den Flanschen (30, 31) 30-50% der Berührungsfläche zwischen der Rollenelektrode (12) und der in der Führungsnut (22, 22') aufgenommenen Rückseite (28, 28') beträgt.

3. Elektrodendraht nach Anspruch 1, dadurch gekennzeichnet, dass die Berührungsfläche zwischen der Rollenelektrode (12) und den Flanschen (30, 31) 40% der Berührungsfläche zwischen der Rollenelektrode (12) und der in der Führungsnut (22, 22') aufgenommenen Rückseite (28, 28') beträgt.

4. Elektrodendraht nach einem der Ansprüche 1 bis 3, dadurch gekennzeichnet, dass der fertig profilierte Elektrodendraht (20) 25-60% länger ist als zu seiner Herstellung verwendeter Runddraht.

5. Elektrodendraht nach Anspruch 4, dadurch gekennzeichnet, dass die Verlängerung des fertig profilierten Elektrodendrahtes (20) 35% beträgt.

6. Elektrodendraht nach einem der Ansprüche 1 bis 5, dadurch gekennzeichnet, dass die in der Führungsnut (22, 22') aufzunehmende Rückseite (28, 28') abgewinkelt in die Rückseite der Flansche (30, 31) des Elektrodendrahtes (20) übergeht.

## Claims

1. Sizing tool for a machine for the longitudinal seam welding of rounded can bodies, having
   - a frame-like roller carrier which defines a sizing plane (C) normal to the longitudinal axis (A) of the can bodies, and a welding device (24) which defines a welding plane (B) normal to the longitudinal axis (A) of the can bodies, the sizing plane (C) and the welding plane (B) at least approximately coinciding,
together with

- a plurality of sizing rollers (41) each of which is mounted on the roller carrier for rotation about a roller axis (E) lying in the sizing plane (C) and which form a ring of rollers through which the can bodies (1) can be moved, and
- devices (37) for adjusting the sizing rollers (41) in the sizing plane (C),

characterised in that

- the sizing rollers (41), distributed on two half-frames (40), are rigidly mounted on the latter and in each case form with the half-frames (40) two rigid roller-ring halves,
- the two rigid roller-ring halves are disposed on a common bridge (31),
- and at least one of the two rigid roller-ring halves can be displaced on the bridge (31) by an adjusting drive (37) to adjust their relative position to one another,
- such that the two rigid roller-ring halves together form an entire adjustable ring of rollers.

2. Sizing tool according to claim 1, characterised in that
   - formed on the bridge (31) are two guides (35) which are in alignment with one another and on each of which a cross slide (36) is guided and can be rigidly clamped, and
   - the two half-frames (40) are each interchangeably secured to one of the cross slides (36).

3. Sizing tool according to claim 2, characterised in that
   - a plurality of sizing rollers (41) are disposed on each of the two half-frames (40), symmetrically in relation to a diametral plane (D) normal to the sizing plane (C) and containing the longitudinal axis (A) of the can bodies, and
   - the guides (35) extend parallel to this diametral plane (D).

4. Sizing tool according to any one of claims 1 to 3, characterised in that an adjusting drive (37) with a threaded spindle is associated with each of the two half-frames (40).

5. Sizing tool according to any one of claims 1 to 4, characterised in that secured to each of the two half-frames (40) is an auxiliary member (46) on which at least one presizing roller (47) is mounted.

6. Sizing tool according to any one of claims 1 to 5, characterised in that the bridge (31) is guided on a machine bed (2) for adjustment parallel to the longitudinal axis (A) of the can bodies.

**Revendications**

1. Fil d'électrode pour une machine à souder en ligne continue, par molettes, comportant au moins une molette électrode (12) et une rainure (22) de guidage prévue à la périphérie de celle-ci, destinée à recevoir le fil d'électrode (20) dont la face frontale (26) orientée face aux pièces à souder (16') a une section bombée et dont la face arrière (28, 28') destinée à être reçue dans la rainure (22, 22') de guidage de la molette électrode (12) présente de préférence une section en V ou une section ronde, caractérisé en ce que deux nervures supplémentaires (30, 31) sont formées dans le sens longitudinal du fil, dans la zone de raccordement entre les faces avant et arrière (26; 28, 28'), destinées à soutenir le fil d'électrode (20) sur la périphérie de la molette électrode (12) de part et d'autre de la rainure (22, 22') de guidage, la face avant (26) du fil et la face avant (30a, 31a) des nervures (30, 31) ayant un rayon de courbure commun (R), qui est choisi de telle manière que, lors du soudage, les bords longitudinaux extérieurs (30b, 31b) des nervures (30, 31) ne touchent pas la surface des pièces à souder (16').

2. Fil d'électrode selon la revendication 1, caractérisé en ce que la surface de contact entre la molette électrode (12) et les nervures (30, 31) représente 30 à 50 % de la surface de contact entre la molette électrode (12) et la face arrière (28, 28') reçue dans la rainure (22, 22') de guidage.

3. Fil d'électrode selon la revendication 1, caractérisé en ce que la surface de contact entre la molette électrode (12) et les nervures (30, 31) représente 40 % de la surface de contact entre la molette électrode (12) et la face arrière (28, 28') reçue dans la rainure (22, 22') de guidage.

4. Fil d'électrode selon l'une des revendications 1 à 3, caractérisé en ce que le fil d'électrode fini profilé (20) est de 25 à 60 % plus long que le fil rond utilisé lors de sa fabrication.

5. Fil d'électrode selon la revendication 4, caractérisé en ce que l'allongement du fil d'électrode fini profilé (20) est de 35 %.

6. Fil d'électrode selon l'une des revendications 1 à 5, caractérisé en ce que la face arrière (28, 28') destinée à être reçue dans la rainure (22, 22') de guidage rejoint par un angle les faces arrière des nervures (30, 31) du fil d'électrode (20).

**Fig. 1**

**Fig. 2**

**Fig.3**

10

**Fig.4**

**Fig.5**

20